Europäisches Patentamt

(19) European Patent Office

Office européen des brevets

(11) Numéro de publication: **0 176 646**
**B1**

(12) **FASCICULE DE BREVET EUROPÉEN**

(45) Date de publication du fascicule du brevet:
20.07.88

(51) Int. Cl.⁴: **H 04 L 1/24**

(21) Numéro de dépôt: **84430030.1**

(22) Date de dépôt: **24.08.84**

(54) **Circuit d'interface de ligne.**

(43) Date de publication de la demande:
09.04.86 Bulletin 86/15

(45) Mention de la délivrance du brevet:
20.07.88 Bulletin 88/29

(84) Etats contractants désignés:
DE FR GB IT

(56) Documents cité:
TELECOM REPORT, vol. 2, no. 6, décembre 1979,
pages 418-423, Munich, DE; V. LUDWIG:
"Basisbandübertragungseinheit UEB 12-03 für
Vierdrahtleitungen"

(73) Titulaire: **International Business Machines
Corporation, Old Orchard Road, Armonk, N.Y.
10504 (US)**
(84) Etats contractants désignés: **DE GB IT**

(73) Titulaire: **Compagnie IBM FRANCE, 5 Place
Vendôme, F-75000 Paris 1er (FR)**
(84) Etats contractants désignés: **FR**

(72) Inventeur: **Geneste, Michel, Résidence "Le
Verlaine" 250 Av. Henri Giraud, F-06140 Vence (FR)**
Inventeur: **Jacquart, Christian, 1600 Chemin de
Provence, F-06510 Gattière (FR)**

(74) Mandataire: **Tubiana, Max, Compagnie IBM France
Département de Propriété Industrielle, F-06610 La
Gaude (FR)**

## Description

La présente invention a pour objet un circuit d'interface de ligne pour un dispositif de transmission sur ligne. Elle s'applique tout particulièrement aux dispositifs de transmission équipés de moyens de test nécessitant un renvoi de la sortie d'un émetteur sur l'entrée du récepteur situé au même endroit.

Les réseaux de transmissions, notamment de transmission numérique, modernes, sont de plus en plus complexes. Tout arrêt de fonctionnement, même momentané est extrêmement onéreux. Il est donc particulièrement important de pouvoir tester rapidement et aussi complètement que possible, chaque station d'émission/réception du réseau.

Le réseau est en général pourvu, à cet effet, d'un dispositif centralisé qui commande les opérations de test à distance. L'un des tests les plus courants consiste à envoyer du système central, vers la station à tester, un signal de test, lequel est ensuite renvoyé vers le système central pour être analysé de manière à en déduire les altérations dues à la transmission et partant de là, les imperfections du tronçon de réseau concerné. Ce type de test est d'autant plus complet que le rebouclage se fait en traversant la plus grande partie possible de la station à tester autrement dit, il est souhaitable qu'avant d'être renvoyé vers la station centrale, le signal de test soit parvenu le plus près possible de la ligne de transmission destinée à être attaquée par l'émetteur de la station à tester. Or le dispositif permettant d'attaquer ladite ligne est un circuit analogique dit d'interface. Il est donc souhaitable que ce circuit d'interface soit conçu de manière à pouvoir être traversé par le signal de test sans que la ligne d'émission qui lui est connectée ne soit elle même attaquée. Une solution simple consiste à placer des relais électromécaniques pour isoler le circuit d'interface de ladite ligne d'émission tout en renvoyant le signal de test vers la station centrale. Les dispositifs électromécaniques sont malheureusement peu fiables et onéreux.

## Objet de l'Invention

La présente invention a donc pour objet un circuit d'interface de ligne de transmission pourvu de moyens de rebouclage entièrement électroniques.

Ledit circuit d'interface est en outre conçu pour charger de manière adéquate la ligne de transmission isolée durant les opérations de rebouclage.

D'autres objets, caractéristiques et avantages ressortiront de la description suivante faite en se référant aux dessins annexés.

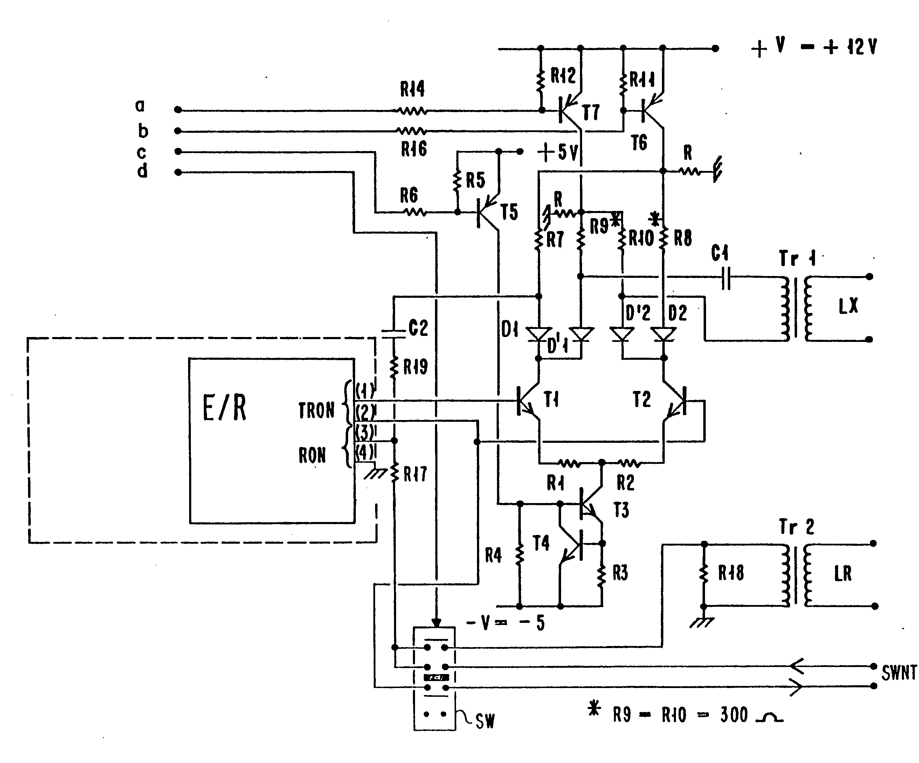

## Brève description de la Figure

La figure représente un mode de réalisation du circuit d'interface faisant l'objet de l'invention.

On a représenté sur la figure un mode de réalisation du circuit d'interface placé entre entrée et sortie d'une station Emission/Réception (E/R) d'un réseau de transmission (non représenté) et les lignes émission et réception désignées respectivement par LX et LR aboutissant à ladite station les bornes de sortie (1) et (2) d'émission (TRON) sont connectée aux entrées d'un amplificateur différentiel. Plus précisément, la sortie TRON est reliée aux bases de deux transistors NPN T1 et T2. Les émetteurs de ces transistors sont reliés à une source de courant à travers des résistances R1 et R2. La source de courant comprend deux transistors (T3 et T4) et deux résistances A3 et A4. La résistance R4 est aussi reliée aux bornes d'une source de tension de continue ( ± 5 V), la liaison à la borne +5 V se faisant à travers un transistor de commutation T5 de type PNP. Cette même base est reliée à travers une résistance R6 à une borne de commande (C) dont on verra l'utilité plus loin. Le collecteur de chacun des transistors T1 et T2 est chargé par deux circuits diode-résistance série. Plus précisément, le collecteur du transistor T1 est relié aux cathodes de deux diodes D1 et D1', tandis que le collecteur du transistor T2 est relié aux cathodes de deux diodes D2 et D'2. Les anodes des diodes D1, D2, D'1 et D'2 sont respectivement reliées à des résistances désignées par R7, R8, R9 et R10 respectivement. Les autres extrémités des résistances R7 et R8 sont reliées au collecteur d'un transistor de commutation T6 de type PNP dont l'émetteur est relié à la borne positive d'une source d'alimentation (+ 12 V par exemple). De même, les extrémités libres des résistances R9 et R10 sont reliées au collecteur d'un transistor T7 de type PNP. L'émetteur de T7 est aussi relié à la borne d'alimentation positive de 12 V. Des résistances R11 et R12 relient respectivement les collecteurs des transistors T6 et T7 à la borne positive +12 V. Les bases des transistors T7 et T6 sont reliées respectivement et à travers des résistances R14 et R16 à des bornes de commande a et b dont on verra le rôle ultérieurement.

Les anodes des diodes D'1 et D'2 sont reliées à la ligne d'émission LX à travers un transformateur Tr1. Un condensateur C1, placé au primaire du transformateur Tr1 sert à bloquer la composante continue du signal appliqué audit primaire.

L'une des bornes (3) de réception (RON) du dispositif E/R est reliée à la ligne de réception LR à travers une résistance R17, un commutateur SW (dont on verra le rôle plus loin), et un transformateur Tr2. La seconde borne (4) de réception est reliée à la masse. De même, l'une des bornes du secondaire du transformateur Tr2 est reliée à la masse. Une résistance R18 est placée en parallèle sur ce secondaire du transformateur Tr2.

L'anode de la diode D1 est reliée à la borne (3) de l'entrée réception du dispositif émetteur/récepteur E/R a travers un circuit série C2, R19.

On notera en outre la présence d'une ligne bifilaire SWNT servant à la fois à l'émission et à la réception. Le fil émission est relié à la borne (2) du dispositif d'Emission/Réception E/R, à travers le commutateur SW. Le fil réception est relié, à travers SW et la résistance R17, à la borne (3) du dispositif d'Emission/Réception E/R.

Enfin, une borne de commande d sert à commander le commutateur SW.

Des résistances R relient les collecteurs des transistors T6 et T7 à la masse.

En fonctionnement Emission/Réception sur 4 fils, c'est-à-dire, dans le cas où les lignes LX et LR doivent être utilisées, les bornes a, b et c sont respectivement portées aux niveaux logiques 0, 1, 0. Ceci étant, la base du transistor T6 est portée à un niveau de tension positif. Le transistor T6 est alors bloqué. Par contre, les transistors T5 et T7 sont passants. Le transistor T5 étant passant, le générateur de courant (T3-T4) fonctionne. Grâce au transistor T7, l'amplificateur différentiel est alimenté à travers les circuits de charge R9-D'1 et R10-D'2. Lorsqu'un signal sort du dispositif d'Emission/Réception E/R à travers ses bornes (1) et (2), il attaque l'amplificateur différentiel (T1-T2) qui lui-même attaque le transformateur Tr1 et donc la ligne d'émission LX.

T6 étant bloqué, aucun signal n'est appliqué au dispositif E/R à travers le circuit C2-R19. Par contre, le commutateur SW est commandé par un signal logique sur la borne "d" de manière telle que le signal reçu sur la ligne LR atteigne les bornes (3) et (4) dites de réception du dispositif E/R.

Pour un fonctionnement en mode dit de test, les bornes a, b, c sont respectivement portées aux niveaux logiques 1, 0, 0. Ceci étant, les transistors T5 et T6 sont passants, tandis que T7 est bloqué. Le blocage de T7 met hors service les circuits de charge R9-D'1 et R10-D'2. La ligne d'émission LX n'est donc plus attaquée. Mais les réglementations, notamment celles de PTT françaises, exigent que dans ces conditions la ligne LX soit quand même rebouclée sur son impédance caractéristique, soit par éxemple Zc = 600 ohms. C'est la raison pour laquelle on a choisi R9 = R10 = 300 ohms. Lesdiodes D'1 et D'2 sont dans le cas où T6 conduit et T7 non, polarisées inverse. Elles sont donc bloquées. Ceci étant, le signal sortant du dispositif E/R par les bornes (1) et (2) est amplifié par l'amplificateur différentiel T1-T2. Le signal ainsi amplifié est prélevé sur le circuit de charge R7 par le circuit C2-A19 et renvoyé à l'entrée de réception (3) du dispositif E/R. Ainsi, le signal émis par la station Emission à laquelle est associé le circuit d'interface que l'on vient de décrire est renvoyé, par rebouclage sur l'entrée réception de la même station. Durant ces opérations, le commutateur SW est commandé pour éviter l'envoi du signal amplifié vers le transformateur Tr2. En d'autres termes, en pourvoyant l'amplificateur d'interface d'un double circuit de charges judicieusement constitué et d'un circuit de commande numérique extrêmement simple, on a permis la réalisation de la fonction de rebouclage en vue de test. Ce rebouclage est en outre réalisé de manière à tester non seulement le dispositif Emission/Réception (E/R) mais aussi le circuit d'interface lui-même, comme on a pu s'en rendre compte à partir de la description faite plus haut.

Lorsque l'on veut utiliser la ligne bifilaire SWNT, la borne de commande cest portée au niveau logique 1, ce qui bloque la transistor T5. Le générateur de courant T3-T4 est alors bloqué.

L'amplificateur T1-T2 n'est plus en mesure de fonctionner. La ligne d'émission est, pour les raisons que l'on a vu plus haut, bouclée sur son impédance caractéristique Zc = R9 + R10 = 600 ohms. D'autre par, le commutateur SW est commandé par un signal logique appliqué sur la borne "d" pour relier la borne TRON (2) du dispositif Emission/Réception E/R à la ligne émission de l'ensemble SWNT, tandis que la ligne réception est connectée à la borne (3) du dispositif Emission/Réception E/R. Les connexions à travers SW se font par simple commutation de barrettes conductrices établissant des ponts dans ledit commutateur SW.

**Revendications**

1. Circuit d'interface de ligne destiné à un dispositif d'émission/réception comportant des bornes d'émission (1 et 2) et des bornes de réception (3 et 4) destinées à être respectivement reliées à une ligne d'émission (LX) et à une ligne de réception (LR), ledit circuit d'interface étant caractérisé en ce qu'il comporte:
   - une alimentation;
   - un amplificateur différentiel (T1-T2) à double circuit de charge (D1-R7, D2-R8; D'1-R9, D'2-R10), amplificateur dont l'entrée est reliée auxdites bornes d'émission;
   - des moyens pour connecter l'un desdits circuits de charge à ladite ligne d'émission;
   - des moyens de commutation (SW et T6) pour connecter lesdites bornes de réception à ladite ligne de réception ou a l'autre circuit de charge; et,
   - des moyens de commande logique (a, b, T6, T7) permettant de sélectionner le circuit de charge à utiliser dans ledit amplificateur différentiel par connection du circuit de charge sélectionnée à ladite alimentation.

2. Circuit d'interface de ligne selon la revendication 1 caractérisé en ce que ledit amplificateur différentiel comprend au moins deux transistors reliés en commun à une même source de courant (+V).

3. Circuit d'interface de ligne selon la revendication 1 ou 2 caractérisé en outre en ce que le fonctionnement de ladite source de courant peut être commandé par un signal logique (c).

4. Circuit d'interface de ligne selon l'une des revendications 2 ou 3 caractérisé en ce que lesdits circuits de charge comportent notamment des résistances en série avec des diodes (D1, D'1, D2, D'2, R7, R8, R9, R10).

5. Circuit d'interface de ligne selon la revendication 4 caractérisé en ce que lesdits transistors de l'amplificateur différentiel sont de type NPN.

6. Circuit d' interface de ligne selon la revendication 5 caractérisé en ce que lesdites diodes (D1, D'1, D2, D'2) des circuits de charge ont la cathode reliée au collecteur de l'un des transistors de l'amplificateur différentiel.

7. Circuit d'interface de ligne selon la revendication 6 caractérisé en ce que lesdits moyens de commande logique sont constitués par des interrupteurs à transistors (T6-T7) servant à commuter sélectivement ladite alimentation sur le circuit de charge sélectionné.

8. Dispositif de test d'une station Emission/Réception utilisant le circuit d'interface des revendications 1 à 7 caractérisé en ce qu'il comporte des moyens logiques (a, b) pour appliquer une combinaison de niveaux logiques sur lesdits moyens de commande logique de manière à alimenter le circuit de charge relié à l'entrée réception de ladite station Emission/Réception.

## Patentansprüche

1. Leitungs-Schnittstellenschaltung für eine Sende-/Empfangsvorrichtung mit Sende-Anschlussklemmen (1 u. 2) und Empfangs-Anschlussklemmen (3 u. 4), die jeweils mit einer Sendeleitung (LX) und einer Empfangsleitung (LR) verbunden sind, wobei diese Schnittstellenschaltung dadurch gekennzeichnet ist, dass sie aufweist:
- eine Stromversorgung;
- einen Differentialverstärker (T1-T2) mit doppeltem Belastungskreis (D1-R7, D2-R8; D'1-R9, D'2-R10), der mit den genannten Sende-Anschlussklemmen verbunden ist;
- Mittel, um die genannten Belastungskreise mit der genannten Sendeleitung zu verbinden;
- Schaltmittel (SW und T6) um die genannten Empfangs-Anschlussklemmen auf die genannte Empfangsleitung oder auf einen anderen Belastungskreis aufzuschalten aufzuschalten, und
- Logik-Steuermittel (a, b, T6, T7), die es ermöglichen, den zu benutzenden Belastungskreis im genannten Differential-Verstärker auszuwählen, indem der ausgewählte Belastungskreis mit der genannten Stromversorgung verbunden wird.

2. Leitungs-Schnittstellenschaltung nach Anspruch 1, dadurch gekennzeichnet, dass der genannte Differentialverstärker zumindest zwei Transitoren aufweist, die gemeinsam mit derselben Stromquelle (+V) verbunden sind.

3. Leitungs-Schnittstellenschaltung nach Anspruch 1 oder 2, weiter dadurch gekennzeichnet, dass die Funktion der genannten Stromquelle von einem logischen Signal (c) gesteuert werden kann.

4. Leitungs-Schnittstellenschaltung nach einem oder dem anderen der Ansprüche 2 oder 3, dadurch gekennzeichnet, dass die genannten Belastungskreise mit Dioden in Serie geschaltete Widerstände (D1, D'1) D2, D'2, R7, R8, R9, R10) aufweisen.

5. Leitungs-Schnittstellenschaltung nach Anspruch 4, dadurch gekennzeichnet, dass die genannten Transistoren des Differential-Verstärkers vom Typ NPN sind.

6. Leitungs-Schnittstellenschaltung nach Anspruch 5, dadurch gekennzeichnet, dass die Kathoden der genannten Dioden (D1, D'1, D2, D'2) der Belastungskreise mit dem Kollektor eines der Transistoren des Differentialverstärkers verbunden sind.

7. Leitungs-Schnittstellenschaltung nach Anspruch 6, dadurch gekennzeichnet, dass die genannten logischen Steuermittel aus Transistor-Schaltern (T6-T7) bestehen, die zur gezielten Schaltung der Versorgung im gewählten Belastungskreis dienen.

8. Testvorrichtung für eine Sende/Empfangsstation, die eine Leitungs-Schnittstellenschaltung nach den Ansprüchen 1 bis 7 benutzt und dadurch gekennzeichnet ist, dass sie logische Mittel (a, b) aufweist, die eine Mischung verschiedener logischer Pegel an die genannten logischen Steuermittel legen, um derart den mit dem Eingang/Ausgang der genannten Sende-/Empfangsstation verbundenen Belastungskreis zu versorgen.

## Claims

1. A line interface circuit for a transmit-receive device comprising transmit ports (1 and 2) and receive ports (3 and 4) intended to be connected to a transmit line (LX) and to a receive line (LR) , respectively, said interface circuit being characterized in that it includes:
- a power supply;
- a differential amplifier (T1-T2) comprising two load circuits (D1-R7, D2-R8; D'1-R9, D'2-R10) and having its input connected to said transmit ports;
- means for connecting one of said load circuits to said transmit line;
- switching means (SW and T6) for connecting said receive ports to said receive line or to the other load circuit; and
- logic control means (a, b, T6, T7) for selecting the load circuit to be used in said differential amplifier by connecting said selected load circuit to said power supply.

2. A line interface circuit according to claim 1, characterized in that said differential amplifier includes at least two transistors connected together to one current source (+V)

3. A line interface circuit according to claim 1 or 2, further characterized in that the operation of said current source can be controlled by a logic signal (c).

4. A line interface circuit according to claim 2 or 3, characterized in that said load circuits include resistors connected in series to diodes (D1, D'1, D2, D'2, R7, R8, R9, R10).

5. A line interface circuit according to claim 4, characterized in that said transistors in the differential amplifier are NPN devices.

6. A line interface circuit according to claim 5, characterized in that said diodes (D1 , D'1, D2 , D'2) in the load circuits have their cathode connected to one of the transistors in the differential amplifier.

7. A line interface circuit according to claim 6, characterized in that said logic control means consists of switching transistors (T6-T7) that serve to selectively switch power from said power supply to the selected load circuit.

8. A test device for a transmit-receive station using the interface circuit of claims 1 to 7, characterized in that it includes logic means (a, b) for applying a combination of logic levels to said logic control means to thereby power the load circuit connected to the receive input of said transmit-receive station.